# EUROPÄISCHE PATENTSCHRIFT

(11) **EP 2 128 462 B1**
(45) Veröffentlichungstag und Bekanntmachung des Hinweises auf die Patenterteilung: **23.11.2011**
(21) Anmeldenummer: 09006956.8
(22) Anmeldetag: 25.05.2009
(51) Int. Cl.: F16B 47/00

(54) **Saugnapf**
Suction cup
Ventouse

(30) Priorität: 28.05.2008 DE 102008025563
(43) Veröffentlichungstag der Anmeldung: 02.12.2009
(73) Patentinhaber: Tormaxx GmbH, 41199 Mönchengladbach (DE)
(72) Erfinder: Koch, Hubert, 41199 Mönchengladbach (DE)
(74) Vertreter: Castell, Klaus

(56) Entgegenhaltungen:
- EP-A1- 0 653 572
- WO-A1-97/37728
- DE-U1-202006 018 981
- US-A- 5 964 437

## Beschreibung

Die Erfindung betrifft einen Saugnapf mit einer Anlagefläche aus elastischem Material gemäß des ersten Teils von Anspruch 1 (EP 0653572A).

Derartige Saugnäpfe sind als Handtuchhalter für Badezimmer allgemein bekannt. Technisch relevant ist jedoch vor allem der Einsatz von Saugnäpfen als Halterung auch für schwerere Gegenstände wie das Halten von Fensterscheiben während des Einbaus oder das Halten von technischen Geräten beispielsweise an der Glasscheibe eines Autos im Fahrzeuginnenraum.

Insbesondere bei dem Halten schwerer Gegenstände tritt das Problem auf, dass immer fraglich ist, ob der Saugnapf noch eine ausreichende Haltefunktion aufweist oder bereits durch eindringende Luft die Saugkraft nachgelassen hat.

Der Erfindung liegt daher die Aufgabe zu Grunde, einen Saugnapf bereitzustellen, der sicher im Einsatz ist.

Diese Aufgabe wird mit einem Saugnapf mit den Merkmalen des Anspruchs 1 gelöst.

Im Bereich der geschwächten Materialdicke wird das Material des Saugnapfs bei an einer Scheibe angeklebtem Saugnapf zur Scheibe hin gezogen, so dass eine kleine Delle entsteht. Sowie die Saugkraft nachlässt, wird zunächst in diesem Bereich sich die Form des Saugnapfes ändern. In der Praxis wird sich die Tiefe der Delle reduzieren. Diese Veränderung der Saugnapfform wird als Anzeige für die Haltestärke des Saugnapfes verwendet werden.

Ein besonderer Vorteil dieser Anzeigeeinrichtung liegt darin, dass die Anlagefläche des Saugnapfes unverletzt bleiben kann, so dass im Bereich der Anzeige oder der reduzierten Materialdicke die Anlagefläche nicht durchbrochen werden muss.

Vorteilhaft ist es, wenn der begrenzte Bereich eine optische Anzeige aufweist. Eine alternative Ausführungsform sieht vor, dass der begrenzte Bereich einen Sensor aufweist.

Dieser Sensor kann elektrisch oder mechanisch arbeiten. Er kann dadurch ein Warnsignal auslösen, wenn die Saugkraft am Saugnapf unter einen bestimmten Bereich fällt.

Aus der Beschreibung ergeben sich für den Fachmann eine Vielzahl an Ausführungsbeispielen. Die Realisierung dieser Ausführungsbeispiele liegt im Können des Fachmanns, so dass im Rahmen der Anmeldung auf genauer beschriebene und gezeichnete Ausführungsbeispiele verzichtet werden kann.

## Patentansprüche

1. Saugnapf mit einer Anlagefläche aus elastischem Material wobei ein begrenzter Bereich der Anlagefläche eine reduzierte Materialdicke aufweist, ***dadurch gekennzeichnet, dass*** der begrenzte Bereich als eine Anzeige für die Haltestärke des Saugnapfes wirkt.

2. Saugnapf nach Anspruch 1, ***dadurch gekennzeichnet, dass*** der begrenzte Bereich eine optische Anzeige aufweist.

3. Saugnapf nach einem der vorhergehenden Ansprüche, ***dadurch gekennzeichnet, dass*** der begrenzte Bereich einen Sensor aufweist.

4. Saugnapf nach Anspruch 3, ***dadurch gekennzeichnet, dass*** der Sensor elektrisch arbeitet.

5. Saugnapf nach Anspruch 3, ***dadurch gekennzeichnet, dass*** der Sensor mechanisch arbeitet

## Claims

1. A suction cup with a contact surface made of an elastic material, a limited area of the contact surface having a reduced material thickness, ***characterized in that*** the limited area acts as an indicator for the retaining force of the suction cup.

2. The suction cup according to claim 1, ***characterized in that*** the limited area has an optical indicator.

3. The suction cup according to one of the afore-mentioned claims, ***characterized in that*** the limited area has a sensor.

4. The suction cup according to claim 1, ***characterized in that*** the sensor operates electrically.

5. The suction cup according to claim 1, ***characterized in that*** the sensor operates mechanically.

## Revendications

1. Ventouse avec une surface de contact en un matériau élastique, une zone limitée de la surface de contact comportant une épaisseur de matériau réduite, ***caractérisée en ce que*** la zone limitée agit en guise d'indicateur de la force de maintien de la ventouse.

2. Ventouse selon la revendication 1, ***caractérisée en ce que*** la zone limitée comporte un indicateur optique.

3. Ventouse selon l'une quelconque des revendications précédentes, ***caractérisée en ce que*** la zone limitée comporte un capteur.

4. Ventouse selon la revendication 1, ***caractérisée en ce que*** le capteur fonctionne électriquement.

5. Ventouse selon la revendication 1, ***caractérisée en ce que*** le capteur fonctionne mécaniquement.
